# EUROPEAN PATENT APPLICATION

(11) **EP 4 837 679 A1**
(43) Date of publication of application: **11.11.2026**
(21) Application number: 26174382.7
(22) Date of filing: 24.04.2026
(51) Int. Cl.: B23B 51/06

(54) **ROTARY CUTTING TOOL AND TOOL BODY**

(30) Priority: 07.05.2025 JP 2025077531
(71) Applicant: Tungaloy Corporation, Iwaki-shi, Fukushima 970-1144 (JP)
(72) Inventor: SHIKAMA, Hiroya, Iwaki-shi, Fukushima, 9701144 (JP)
(74) Representative: Vossius & Partner Patentanwälte Rechtsanwälte mbB

(57) **Abstract**

The present disclosure provides a rotary cutting tool having a cutting member on its leading end side and having a cylindrical shape or a substantially cylindrical shape, the rotary cutting tool comprising a chip discharge hole formed from the leading end side toward the base end side, wherein at least a portion of a cross-section of the chip discharge hole, which is perpendicular to the rotational axis of the rotary cutting tool, is a non-circular cross-section having short side portions and long side portions.

## Description

### Background

### Field

The present disclosure relates to a rotary cutting tool and a tool body.

### Description of Related Art

When hole forming processes are performed using a rotary cutting tool, such as a tool for BTA (Boring & Trepanning Association) machining, it is required that coolant be supplied to a cutting edge of a cutting member that is provided on the leading end side of such tool (see, for example, JP2003-502163 A and JP2015-066678 A). Conventional rotary cutting tools typically have a structure in which coolant is supplied to a cutting edge by way of an oil supply groove provided on a peripheral part of such rotary cutting tools.

However, since a BTA tool includes an opening for chip discharge (chip mouth), a considerable amount of coolant that is supplied from the base end side thereof tends to be discharged from the chip mouth before reaching the leading end of the tool. In addition, water-insoluble cutting oil having a high viscosity is often used as the coolant, and it has been difficult to supply a sufficient amount of coolant to the cutting edge.

In order to address such problem, the applicant has proposed structures that are capable of supplying a sufficient amount of coolant to the leading end side of a tool by providing, as part of a coolant flow path, a through hole extending from an outer peripheral surface of a tool body to the leading end side thereof. However, as further improvements, there is a strong need for structures capable of achieving both chip discharge performance and high stiffness (strength) of the tool body, while facilitating the formation of a through hole that contributes to an increase in the amount of the supply of coolant.

### Summary

The present disclosure has been made under such circumstances, and an object of the present disclosure is to provide a tool body and a rotary cutting tool having a structure that is capable of achieving both excellent chip discharge performance and a high stiffness (strength) of a tool body and facilitating the formation of a through hole that contributes to an increase in the amount of the supply of coolant.
(1) In order to solve the problem set forth above, an example rotary cutting tool according to the present disclosure is a rotary cutting tool having a cutting member on a leading end side thereof and having a cylindrical shape or a substantially cylindrical shape, the rotary cutting tool including: a chip discharge hole formed from the leading end side toward a base end side, wherein at least a portion of a cross-section of the chip discharge hole, which is perpendicular to a rotational axis of the rotary cutting tool, is a non-circular cross-section having short side portions and long side portions (the cross-section which is perpendicular to the rotational axis of the rotary cutting tool includes such non-circular cross-section). It should be noted that examples of the "cutting member" may include: a cutting insert to be mounted on a mounting seat that is provided as appropriate on the leading end side of the rotary cutting tool; and an insert brazed on the leading end side.

With such configuration, by forming the chip discharge hole from the leading end side toward the base end side of the rotary cutting tool (e.g., on the radially inner side of the outer peripheral surface) and configuring at least a portion of the cross-sectional shape of such chip discharge hole so as to have a non-circular shape (e.g., a quasi-rectangular shape), it is possible to secure a relatively large cross-sectional area between the outer peripheral surface and the long side portions of the chip discharge hole. This makes it possible to increase the thickness of the material of such portions, whereby it is possible to increase the stiffness of such portions and the entire rotary cutting tool. This allows for a design wherein the cutting force generated by the cutting edge of the cutting member is mainly received by such high-stiffness portions, which contributes to suppressing the deformation of the rotary cutting tool and increasing the machining resistance of the rotary cutting tool. In addition, by employing the non-circular cross-sectional shape having short side portions and long side portions, instead of simply reducing the cross-sectional area of the chip discharge hole, in order to increase the stiffness, it becomes possible to suitably secure the flow path for the chips and maintain an excellent chip discharge performance. Furthermore, the increase in the thickness of the material facilitates the formation of the coolant flow path having the through holes, which makes it possible to increase the amount of supply of the coolant to the cutting edge.

[2] As the specific configuration for achieving the chip discharge hole having the properties set forth above, the rotary cutting tool may be configured such that, for example, when a predetermined two-dimensional coordinate system is defined with coordinates of the rotational axis serving as a point of origin in at least a portion of the cross-section, relationships shown in Equation (1) and Equation (2) set forth below are satisfied: $d 1 \geq D x 0.8$ (1) and $d 2 \leq D x 0.7$ (2) wherein:
D represents a tool diameter of the rotary cutting tool;
d1 represents a maximum inner diameter of the non-circular cross-section in a first quadrant and a third quadrant which correspond mainly to the short side portions (or include the short side portions); and
d2 represents a maximum inner diameter of the non-circular cross-section in a second quadrant and a fourth quadrant which correspond mainly to the long side portions (or include the long side portions).

Here, examples of the "two-dimensional coordinate system" may include "an XY coordinate system wherein a direction extending between the rotational axis and the outermost end (outermost point) of a cutting edge of a cutting member is set to an X axis" and, in the situation where a cutting member is a cutting insert, "an XY coordinate system wherein, in a cross-section passing through a mounting seat (insert seat) of a cutting insert, a direction parallel to the bottom surface of the mounting seat is set to an X axis." In such cases, in the "XY coordinate system," a quadrant located on the front side of the cutting edge of the cutting member is defined as a "first quadrant," and a "second quadrant," a "third quadrant" and a "fourth quadrant" are defined in such order in the counterclockwise direction from the "first quadrant" (the same applies hereinafter). It should be noted that, the "front side" and the "rear side" as used herein refer to "front and rear sides" in the rotating direction of the rotary cutting tool, and the "inner diameter" of the "non-circular cross-section" as used herein refers to the diameter of a line segment passing through the above-described "point of origin."

According to such configuration, securing a relatively large area between the outer peripheral surface of the rotary cutting tool and the long side portions of the chip discharge hole makes it possible to increase the stiffness of such portions and the entire rotary cutting tool. In addition, since such configuration makes it possible to suitably secure the flow path for the chips, stable and excellent chip discharge performance can be achieved. Furthermore, since such configuration facilitates the formation of the through holes as part of the coolant flow path, it becomes possible to increase the amount of supply of the coolant and improve both lubricating performance and cooling performance.

[3] Similarly to the above, the rotary cutting tool may be configured such that, when a predetermined two-dimensional coordinate system is defined with coordinates of the rotational axis serving as a point of origin in at least a portion of the cross-section, a relationship shown in Equation (3) set forth below is satisfied: $t 1 < t 2$ (3) wherein:
t1 represents a thickness of a central portion of each of the short side portions in a first quadrant and a third quadrant which correspond mainly to the short side portions (or include the short side portions); and
t2 represents a thickness of a central portion of each of the long side portions in a second quadrant and a fourth quadrant which correspond mainly to the long side portions (or include the long side portions).

Here, the term "thickness" refers to a distance from the outer peripheral surface of the rotary cutting tool to the inner peripheral surface of the chip discharge hole in the cross-section described above, and the virtual extension thereof passes through the point of origin described above. The configuration which satisfies the relationship shown in Equation (3) provides for a comparative enlargement of the space in the first quadrant and in the third quadrant located on the front side of the cutting edge of the cutting member, which makes it possible to ensure the chip discharge performance while at the same time achieving a comparative increase in the stiffness of the rotary cutting tool in the second quadrant and the fourth quadrant which mainly contribute to the receipt of the cutting force on the rear side of the cutting edge of the cutting member. As a result, it is possible to achieve both suppression of the deformation of the rotary cutting tool and improvement of the chip discharge performance.

[4] Similarly to the above, it may be effective to configure the rotary cutting tool such that, when a predetermined two-dimensional coordinate system is defined with coordinates of the rotational axis serving as a point of origin in at least a portion of the cross-section, a relationship shown in Equation (4) set forth below is satisfied: $s 1 < s 2$ (4) wherein:
s1 represents a cross-sectional area of the rotary cutting tool in a first quadrant and a third quadrant which correspond mainly to the short side portions (or include the short side portions); and
s2 represents a cross-sectional area of the rotary cutting tool in a second quadrant and a fourth quadrant which correspond mainly to the long side portions (or include the long side portions).

The term "cross-sectional area" here refers to, in the cross-section described above, the area of a material part of the rotary cutting tool that is contained in the region corresponding to each quadrant. By satisfying the relationship shown in Equation (4), it becomes possible to easily secure the stiffness of the cross-section in the second quadrant and the fourth quadrant on which a large load acts during cutting. In addition, by setting the cross-sectional area s2 so as to be larger than the cross-sectional area s1, it becomes possible to secure a space for forming the chip discharge path in the first quadrant and the third quadrant, while allowing the structural support to be concentrated in the second quadrant and the fourth quadrant.
[5] In the configuration described above, an inner peripheral surface of the chip discharge hole may be formed smoothly at least in a direction in which chips are discharged (i.e., from the leading end side toward the base end side). In the present disclosure, the term "smooth/smoothly" refers to a state which satisfies any of the states in which, at least in a direction in which chips are discharged: (1) the inner peripheral surface has no acute edge or noncontinuous steps; (2) the inner peripheral surface only has a continuous curved surface or a flat surface; (3) the inner peripheral surface does not have a cutter mark; and (4) the inner peripheral surface does not have a substantially visible cutter mark, as a result of machining such as fillet machining, curved surface finishing, polishing, etc. Such configuration makes it possible to prevent retention or depositing of chips on a step or an edge, which makes it possible to further improve chip flow, and consequently increase the efficiency of the cutting process as a whole.
[6] More specifically, the inner peripheral surface of the chip discharge hole may be configured so as to satisfy a relationship shown in Equation (5) set forth below: $R \geq 0.1 mm$ (5). wherein, when the inner peripheral surface has an edge, R represents a minimum radius of curvature of the edge.

The term "minimum radius of curvature" here complies with JIS B 0621: 1984 (Definitions and Designations of Geometrical Deviations), which refers to, for example, the minimum radius of curvature calculated based on contour data of an edge (portion) obtained by using a contact type or a noncontact type profile measurement instrument. Even if the inner peripheral surface has an edge, by setting the minimum radius of curvature R of such portion to a value stated above, it is possible to advantageously improve chip carrying performance and reduce friction. In addition, although the inner peripheral surface does not have to be made as smooth as a mirror finished surface, chips are likely to be caught on such edge or poor chip discharge is likely to occur when the minimum radius of curvature R of the edge is less than 0.1 mm.
[7] In addition, as described earlier, the rotary cutting tool may be configured so as to include a coolant flow path having a through hole that extends from an outer peripheral surface of the rotary cutting tool toward a leading end side of the rotary cutting tool. Such configuration makes it possible to allow the coolant, which may otherwise be sucked into the chip discharge hole, to be directly and securely supplied to the leading end side of the rotary cutting tool via the through holes. Accordingly, a sufficient amount of coolant can be supplied to the cutting edge of the cutting member which is mounted on the leading end side of the rotary cutting tool, which makes it possible to further improve the lubricating performance and the cooling performance during cutting, particularly in an area around the cutting edge.
[8] More specifically, the coolant flow path may pass between the long side portions and the outer peripheral surface and extend to an end surface on the leading end side. In such configuration, as the coolant flow path does not have a complicated shape, this reduces pressure loss or resistance of the coolant flowing through the through holes, and a sufficient amount of coolant can therefore be more smoothly supplied to the cutting edge. In addition, since such configuration makes it possible to form the coolant flow path as a linear path having a relatively simple shape without being unnecessarily bent, the pressure loss and the flow resistance of the coolant can be effectively reduced. As a result, a sufficient amount of coolant can be stably supplied to the cutting edge, which makes it possible to further improve the lubricating performance and the cooling performance during cutting in an area around the cutting edge.
[9] A tool body according to the present disclosure has a cylindrical shape or a substantially cylindrical shape, and such tool body includes: a mounting seat provided on a leading end side, the mounting seat being configured to mount a cutting insert; and a chip discharge hole formed from the leading end side toward a base end side, wherein at least a portion of a cross-section of the chip discharge hole, which is perpendicular to a rotational axis of the tool body, is a non-circular cross-section having short side portions and long side portions. In this way, the "tool body" according to the present disclosure corresponds to a portion of the "rotary cutting tool" according to the present disclosure from which a cutting insert (cutting member) is excluded.

### Brief Description of Drawings

Fig. 1 is a perspective view that schematically shows the entire configuration of a rotary cutting tool 1 according to a first embodiment.
Fig. 2 is a front view of the rotary cutting tool 1 shown in Fig. 1.
Fig. 3 is a plan view of the rotary cutting tool 1 shown in Fig. 1.
Fig. 4 is a cross-sectional view taken along line IV-IV (X axis) in Fig. 2.
Figs. 5A to 5C are cross-sectional views respectively taken along line A-A, line B-B and line C-C in Fig. 3.
Fig. 6 is a perspective view that schematically shows the entire configuration of a rotary cutting tool 2 according to a second embodiment.
Fig. 7 is a front view of the rotary cutting tool 2 shown in Fig. 6.
Fig. 8 is a plan view of the rotary cutting tool 2 shown in Fig. 6.
Fig. 9 is a cross-sectional view taken along line IX-IX (X axis) in Fig. 7.
Figs. 10A to 10C are cross-sectional views respectively taken along line D-D, line E-E and line F-F in Fig. 8.

### Detailed Description

Embodiments of the present disclosure will now be described below with reference to the attached drawings. In order to facilitate understanding of the description, like components are denoted with like reference numerals to the extent possible in the drawings, and redundant description will be omitted. It should be noted that the embodiments set forth below are merely examples for explaining the present disclosure, and the present disclosure is not limited to such embodiments. In addition, various modifications may be made to the present disclosure, without deviating from the gist of the present disclosure. Furthermore, a person skilled in the art would be able to employ an embodiment with one or more elements to be described below being substituted with equivalents thereof, and such embodiment is also encompassed in the scope of the present disclosure.

### <First Embodiment>

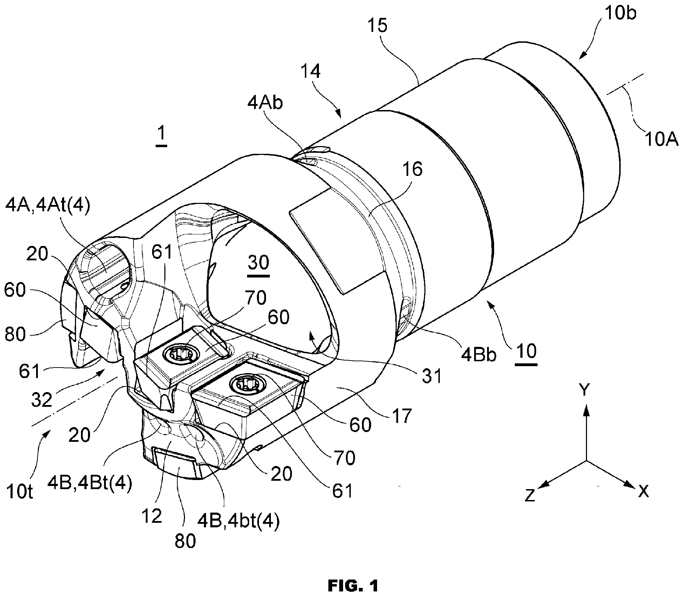

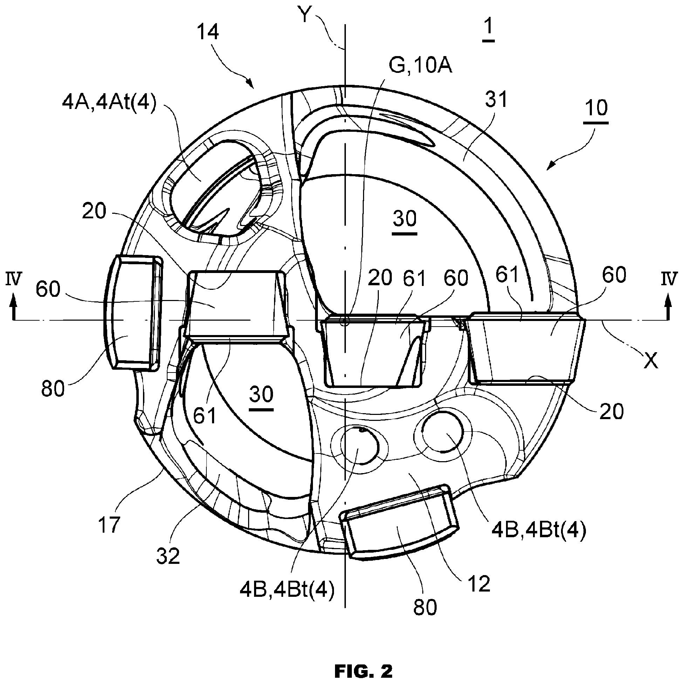

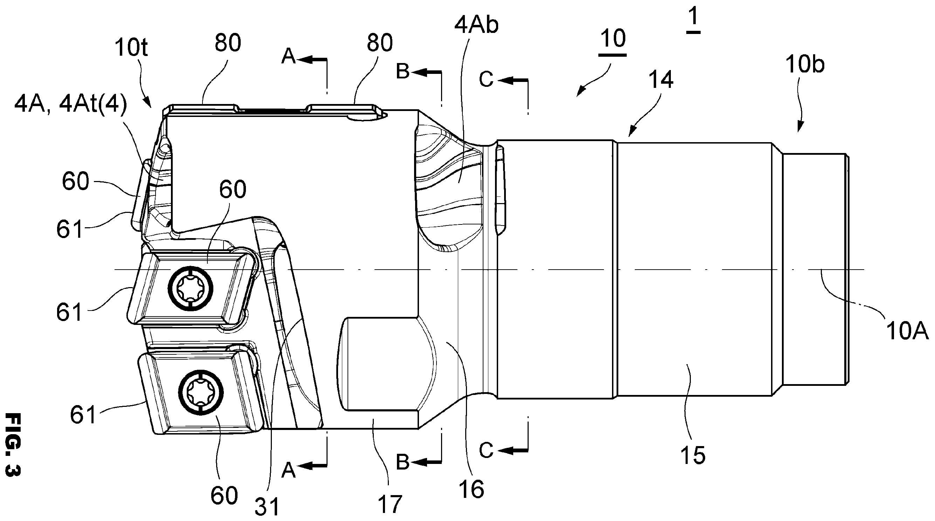

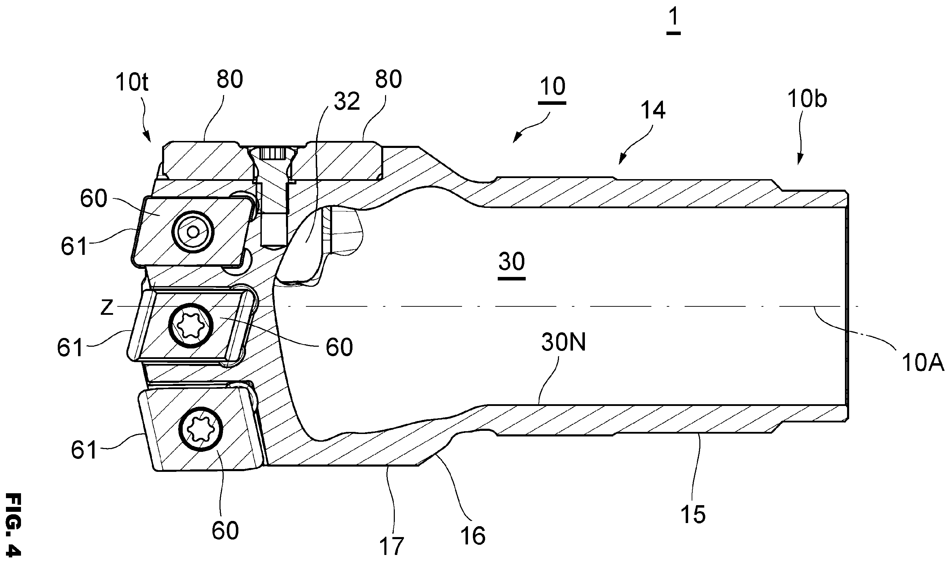

Fig. 1 is a perspective view that shows the entire configuration of a rotary cutting tool 1 according to the present embodiment, and Figs. 2 and 3 are a front view and a plan view, respectively, of the rotary cutting tool 1 shown in Fig. 1. Fig. 4 is a cross-sectional view taken along line IV-IV (X axis) in Fig. 2.

As shown in Figs. 1 to 4, the rotary cutting tool 1 includes a tool body 10 having, on its leading end side 10t, a mounting seat 20 on which a cutting insert 60 is mounted (i.e., the tool body 10 is a portion of the rotary cutting tool 1 from which the cutting insert 60 is excluded). The rotary cutting tool 1 has a substantially cylindrical shape as a whole and has a connection part 15, a tapered part 16 and a large diameter part 17 form a base end side 10b toward the leading end side 10t of the tool body 10, and the rotary cutting tool 1 is formed so as to extend along a rotational axis 10A (i.e., a Z-axis direction in Fig. 1) of the rotary cutting tool 1 and the tool body 10. A chip discharge hole 30, through which chips and coolant are discharged, is defined on the radially inner side of an outer peripheral surface 14 so as to extend from the leading end side 10t toward the base end side 10b of the tool body 10.

The connection part 15 is a portion located on the base end side 10b of the tool body 10 and has a cylindrical shape. The large-diameter part 17 is a portion located on the leading end side 10t of the tool body 10 and has a larger diameter than the connection part 15. The tapered part 16 is a portion that connects the connection part 15 and the large-diameter part 17 and has a tapered outer peripheral surface. In addition, the connection part 15 is a portion that is to be connected to a drill pipe (not shown), and an outer peripheral surface of the connection part 15 is provided with, for example, a screw (not shown) which is to be screwed with the drill pipe (although not particularly limited to such configuration).

The chip discharge hole 30 is formed so as to be as close as possible to a cutting edge of a cutting member. However, in this embodiment, in order to secure a replacement space for cutting inserts 60, the chip discharge hole 30 is formed on the radially inner side of the outer peripheral surface 14 of the tool body 10 so as to extend from near the mounting seat 20, which is provided on the leading end side 10t, toward the base end side 10b. A portion called a "chip pocket" is located on the leading end side 10t of the tool body 10, and openings 31, 32 (which are also referred to as "chip mouths") of the chip discharge hole 30 are provided in the rear end of such chip pocket.

The portion which opens to the periphery of the tool body 10 is the chip pocket, whereas the portion extending from a location where there is a wall on the peripheral side of the tool body 10 is the chip discharge hole 30. In the rotary cutting tool 1 of the present embodiment, three cutting inserts 60 are used, wherein two of them are oriented in the same direction and the other one is oriented in the opposite direction, as will be described later; therefore, chips are generated in two directions. Thus, in the present embodiment, two openings 31, 32 having different sizes are provided in a leading end surface 12. The chip discharge holes 30 extending from each of the two openings 31, 32, which serve as entrances for the chips, meet at a position closer to the base end 10b than to the leading end surface 12.

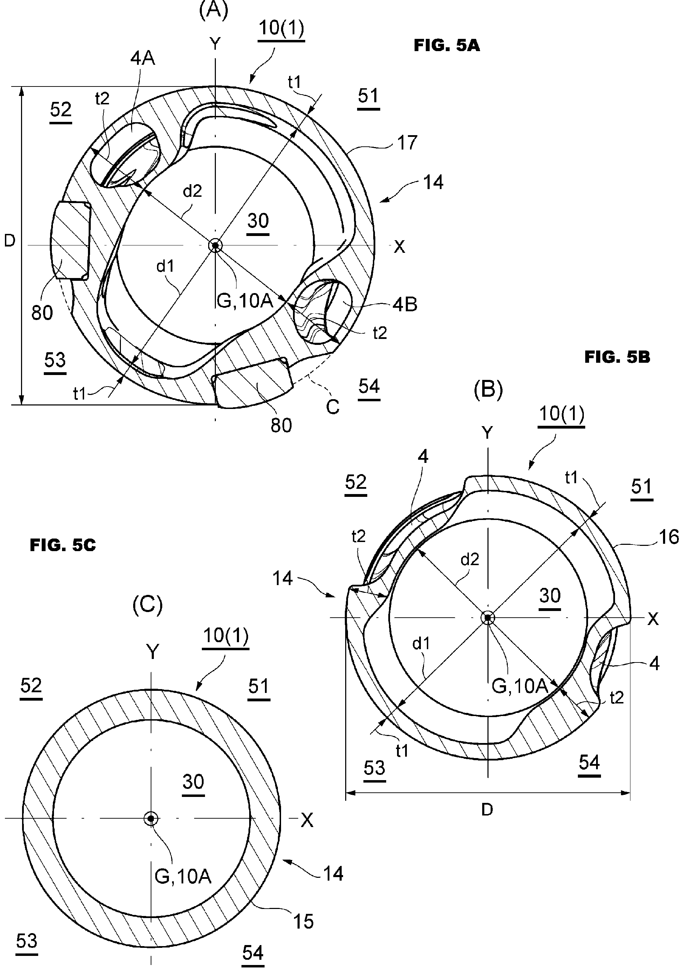

Next, Figs. 5A to 5C are cross-sectional views respectively taken along line A-A (large-diameter part 17), line B-B (tapered part 16) and line C-C (connection part 15) in Fig. 3. As shown in Figs. 5A to 5C, the cross-sections of the chip discharge hole 30, which are perpendicular to the rotational axis 10A and taken at the connection part 15, the tapered part 16 and the large-diameter part 17, have different shapes from each other. As shown in Fig. 4, the entire inner peripheral surface 30N of the chip discharge hole 30 is formed smoothly as a whole, so as not to have steps or edges at each of the connecting portions between the connection part 15, the tapered part 16 and the large-diameter part 17, at least in a direction in which chips are discharged (i.e., from the leading end side 10t toward the base end side 10b). More specifically, the inner peripheral surface 30N of the chip discharge hole 30 is configured so as to satisfy the relationship shown in Equation (5) below. In Equation (5), when the inner peripheral surface 30N has an edge, R represents the minimum radius of curvature of such edge. $R \geq 0.1 mm$ (5)

Cutting inserts 60 and guide pads 80 are removably mounted on the leading end side 10t of the tool body 10. The specific arrangement or shape of these cutting inserts 60 and guide pads 80 are not particularly limited. In this embodiment, for example, two cutting inserts 60 are mounted for the opening 31 of the chip discharge hole 30, and one cutting insert 60 is mounted for the opening 32 of the chip discharge hole 30, with each cutting insert 60 being mounted by using an insert mounting screw 70. Furthermore, in the outer peripheral surface 14 near the leading end 10t, the guide pads 80 are mounted on the radially outer side of the cutting insert 60 corresponding to the opening 32 (i.e., the left side in Fig. 2) and on the radially outer side which is perpendicular to the direction in which the two cutting inserts 60 corresponding to the opening 31 are disposed side-by-side (i.e., the lower side in Fig. 2).

Here, in the cross-sections shown in Figs. 5A to 5C, an XY coordinate system is defined with the coordinates of the rotational axis A of the rotary cutting tool 1 and the tool body 10 being set as a point of origin G, and the direction extending between such point of origin G and the outermost end (outermost point) of the cutting edge 61 of the cutting insert 60 being set as an X axis. In the present embodiment, the point of origin G coincides with the center of a virtual perfect circle C having the maximum outer diameter of the tool body 10 (and including part of the outer peripheral surface 14). In this XY coordinate system, the front side of the cutting edges 61 of the two cutting inserts 60 that are disposed side-by-side (i.e., the upper side in Fig. 2) serves as a first quadrant 51 (X>0, Y>0). The front side of the cutting edge 61 of the other cutting insert 60 (i.e., the lower side in Fig. 2) serves as the third quadrant 53 (X<0, Y<0). The rear side of the cutting edges 61 of the two cutting inserts 60 that are disposed side-by-side (i.e., the lower side in Fig. 2) serves as a fourth quadrant 54 (X>0, Y<0). The rear side of the cutting edge 61 of the other cutting insert 60 (i.e., the upper side in Fig. 2) serves as the second quadrant 52 (X<0, Y>0).

The cross-sections of the chip discharge hole 30 at the large-diameter part 17 and the tapered part 16 (portions with no hatching) in Figs. 5A and 5B are non-circular cross-sections. Such non-circular cross-sections each have short side portions located mainly in the first quadrant 51 and the third quadrant 53, with the short side portions extending along the outer peripheral surface 14 on the slightly inner side thereof in the radial direction. It should be noted that the two-dimensional coordinate system in each of the cross-sections takes over the XY cross-section that includes the cutting edges 61 shown in Fig. 2 (the same applies hereinafter). Each of the non-circular cross-sections have long side portions located mainly in the second quadrant 52 and the fourth quadrant 54, with the long side portions extending in a substantially linear manner on the further inner side in the radial direction. On the other hand, the cross-section of the chip discharge hole 30 at the connection part 15 shown in Fig. 5C is a perfectly circular cross-section. In this way, the cross-sections shown in Figs. 5A and 5B correspond to the "at least a portion of the cross-section that is perpendicular to the extending axis of the tool body" in the present disclosure.

The rotary cutting tool 1 and the tool body 10 are configured so as to satisfy the relationships shown in Equation (1) and Equation (2) set forth below, regarding the cross-sections shown in Figs. 5A and 5B. In these equations, D represents the tool diameter of the rotary cutting tool 1, d1 represents the maximum inner diameter of the non-circular cross-section of the chip discharge hole 30 in the first quadrant 51 and the third quadrant 53, and d2 represents the maximum inner diameter of the non-circular cross-section of the chip discharge hole 30 in the second quadrant 52 and the fourth quadrant. $d 1 \geq D x 0.8$ (1) $d 2 \leq D x 0.7$ (2)

The tool body 10 is configured so as to satisfy the relationships shown in Equation (3) and Equation (4) set forth below, regarding the cross-sections shown in Figs 5A and 5B. In these equations, t1 represents the thickness of a central portion of each of the short side portions in the first quadrant 51 and the third quadrant 53, and t2 represents the thickness of a central portion of each of the long side portions in the second quadrant 52 and the fourth quadrant 54. In addition, s1 represents the cross-sectional area of the tool body 10 (hatched portion) in the first quadrant 51 and the third quadrant 53, and s2 represents the cross-sectional area of the tool body 10 (hatched portion) in the second quadrant 51 and the fourth quadrant 54. $t 1 < t 2$ (3) $s 1 < s 2$ (4)

In addition, the tool body 10 includes a coolant flow path 4 formed so as to supply coolant from the base end side 10b toward the leading end side 10t. The coolant flow path 4 has through holes 4A, 4B that extend through the large-diameter part 17 from the outer peripheral surface 14 of the tool body 10 toward the leading end side 10t. The through holes 4A, 4B have their respective base end-side openings 4Ab, 4Bb which are provided in the tapered part 16, and their respective leading end-side openings 4At, 4Bt which are provided in the leading end surface 12 of the tool body 10. It is preferable for the base end-side openings 4Ab, 4Bb to have a shape that allows for the coolant to be easily guided and introduced into the through holes 4A, 4B when the rotary cutting tool 1 performs cutting while rotating, which may be, for example, a shape in which the base end-side openings 4Ab, 4Bb are inclined with respect to the rotational axis 10A as they extend toward the leading end side 10t, or a shape in which such base end-side openings 4Ab, 4Bb may also extend in the circumferential direction.

As shown in Figs. 2 and 5, multiple through holes 4A, 4B are provided in the circumferential direction along the outer peripheral surface 14 and located in a manner so as to sandwich the rotational axis 10A at positions of the tool body 10 where the chip discharge hole 31 is not provided. More specifically, the through holes 4A, 4B pass between the outer peripheral surface 14 and the long side portions of the chip discharge hole 30 in the second quadrant 52 and the fourth quadrant 54 and extend to the leading end surface 12 on the leading end side 10t. The leading end-side openings 4At, 4Bt of the through holes 4A, 4B are provided in a manner so as to sandwich the rotational axis 10A at positions of the leading end surface 12 where the openings 31, 32 of the chip discharge hole 30 are not provided. In addition, the through hole 4B branches into two sections at a midpoint of its way to the leading end side 10t and has two openings which correspond to such two sections. The leading end-side opening 4Bt of the through hole 4B has an opening area that is smaller than the opening area of the leading end-side opening 4At of the through hole 4A, and is formed in a circular shape.

### <Second Embodiment>

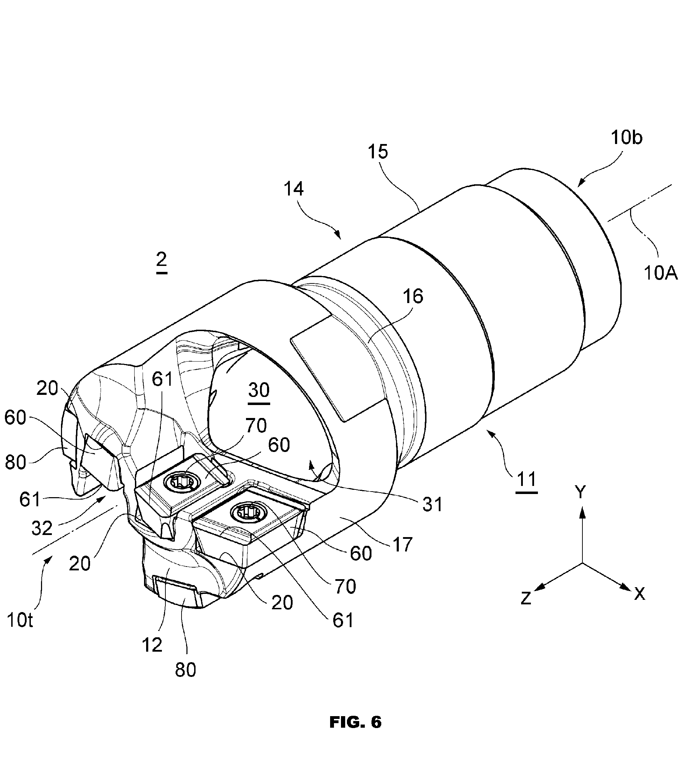

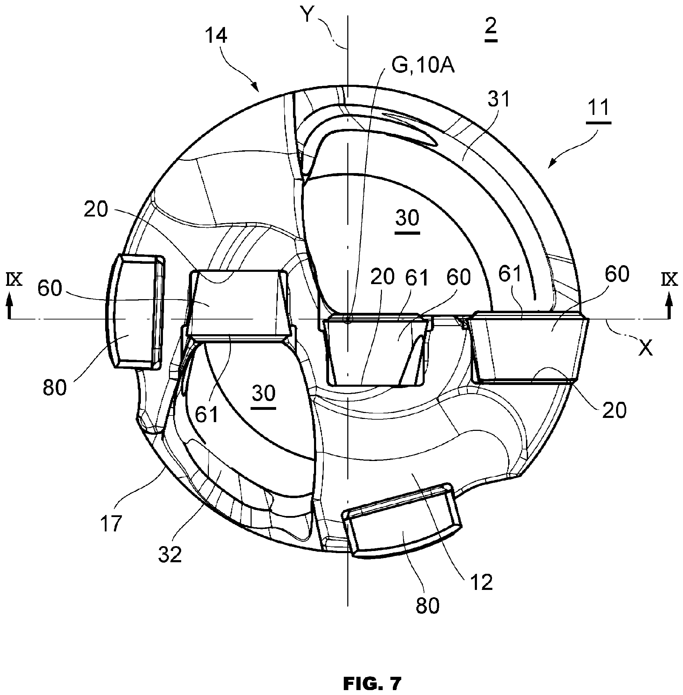

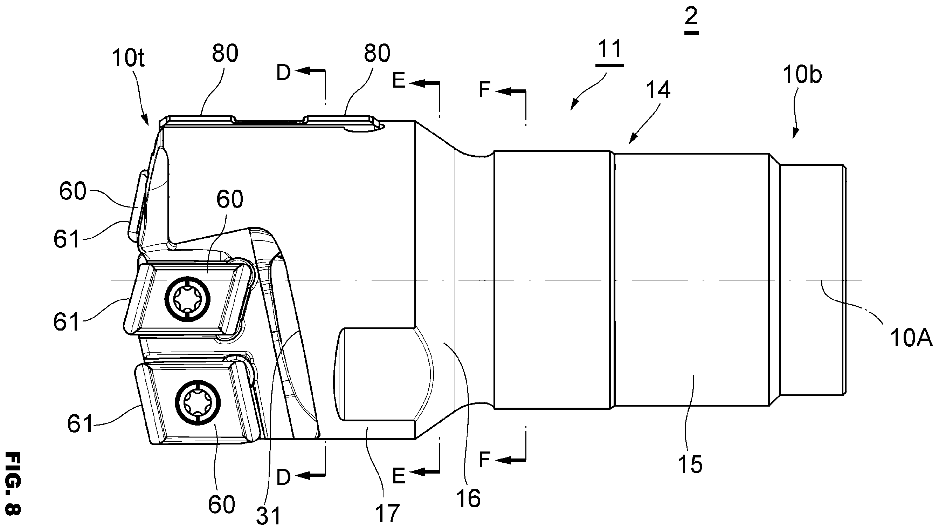

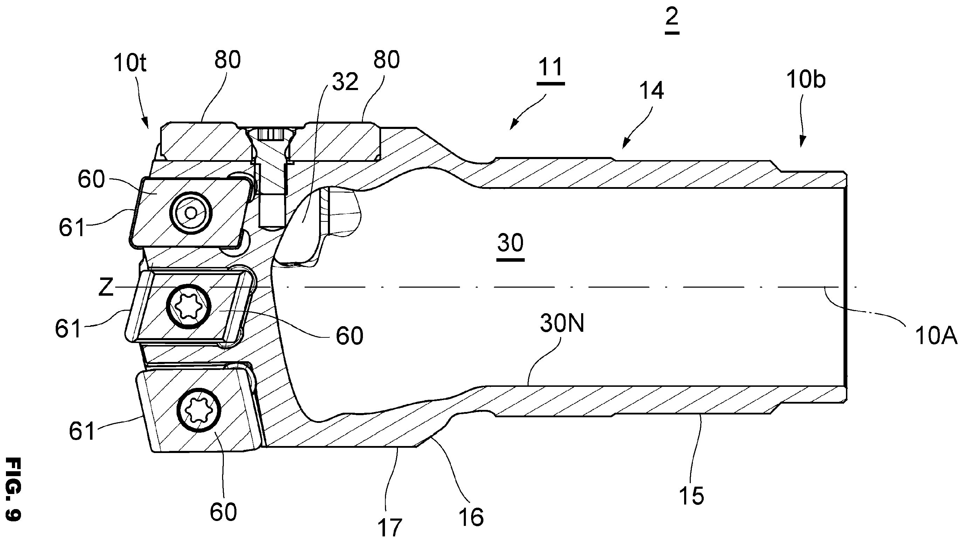

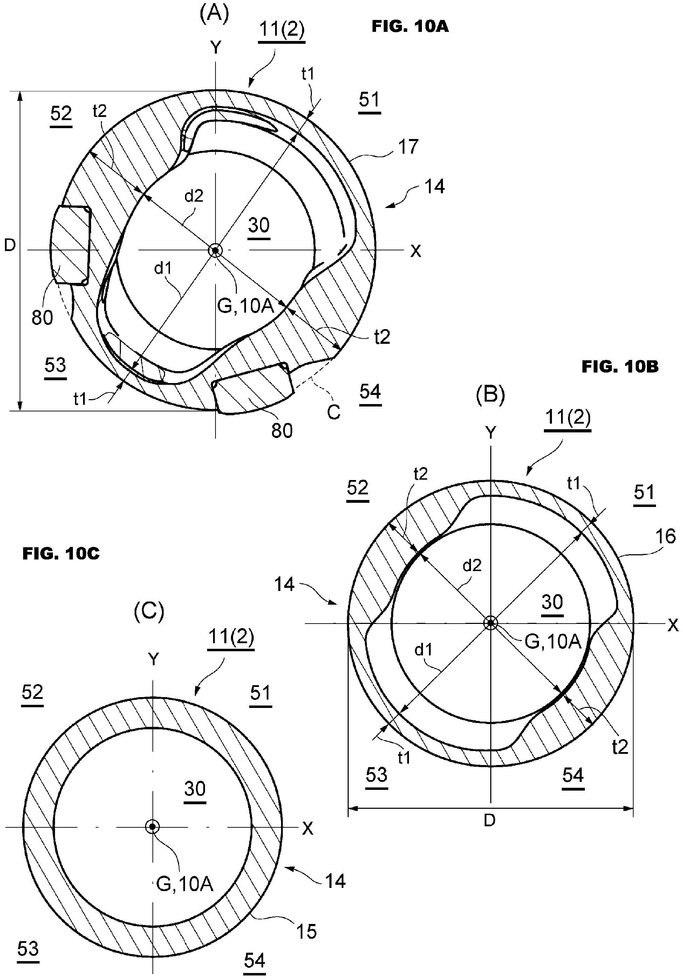

Fig. 6 is a perspective view that shows the entire configuration of a rotary cutting tool 2 according to the present embodiment, and Figs. 7 and 8 are a front view and a plan view, respectively, of the rotary cutting tool 2 shown in Fig. 6. Fig. 9 is a cross-sectional view taken along line XI-XI (X axis) in Fig. 7. Figs. 10A to 10C are cross-sectional views respectively taken along line D-D (large-diameter part 17), line E-E (tapered part 16) and line F-F (connection part 15) in Fig. 8. As shown in these diagrams, the rotary cutting tool 2 has the same configuration as the rotary cutting tool 1 in the first embodiment, except that it includes a tool body 11 instead of the tool body 10. The tool body 11 has the same configuration as the tool body 10 in the first embodiment, except that it lacks the through holes 4A, 4B of the coolant flow path 4.

The tool body 11 of the rotary cutting tool 2 is configured so as to satisfy the relationships shown in Equation (1) through Equation (5) set forth below, in the same way as the tool body 10 of the rotary cutting tool 1, although the cross-sectional shapes shown in Figs. 10A and 10B are slightly different from the cross-sectional shapes shown in the corresponding diagrams of Figs. 5A and 5B. The parameters in the equations below are the same as those in the first embodiment. $d 1 \geq D \times 0.8$ (1) $d 2 \leq D \times 0.7$ (2) $t 1 < t 2$ (3) $s 1 < s 2$ (4) $R \geq 0.1 mm$ (5)

### <Effects and Advantages of Embodiments>

The rotary cutting tools 1, 2 and their respective tool bodies 10, 11 having the configurations described above provide the effects and advantages set forth below. More specifically, the rotary cutting tool 1, 2 has the chip discharge hole 30 on the radially inner side of the outer peripheral surface 14, and at least a portion of the cross-sectional shape of the chip discharge hole 30 is a non-circular shape. This configuration makes it possible to secure a relatively large cross-sectional area s2 between the outer peripheral surface 14 and the long side portions of the chip discharge hole 30, which makes it possible to increase the thickness t2 of the material of such portions, whereby it is possible to increase the stiffness of such portions and the entire rotary cutting tool 1, 2.

In the cutting force generated by the cutting edge 61 of the cutting insert 60, the main component (a force component that is orthogonal to the cutting edge 61 in a direction facing the rotational direction in the leading end view of Fig. 2) is the largest. In this regard, in the configuration employing the non-circular cross-sectional shape described above, the main component of the cutting force can be mainly received by the high stiffness portions (i.e., portions corresponding to the second quadrant 52 and the fourth quadrant 54), which makes it possible to suppress deformation of the rotary cutting tool 1, 2 and increase its machining resistance. In addition, by employing the non-circular cross-sectional shape having short side portions and long side portions, instead of simply reducing the cross-sectional area of the chip discharge hole 30, in order to increase the stiffness, it becomes possible to suitably secure the flow path for the chips and maintain an excellent chip discharge performance.

Furthermore, the increase in the thickness of the material facilitates the formation of the through holes 4A, 4B as in the tool body 10 of the rotary cutting tool 1, and it therefore becomes possible to increase the amount of the supply of coolant to the cutting edge 61 by using such through holes 4A, 4B. On the other hand, since the tool body 11 of the rotary cutting tool 2 does not have the through holes 4A, 4B, it is possible to further increase the cross-sectional area s2 between the outer peripheral surface 14 and the long side portions of the non-circular cross-section of the chip discharge hole 30 and thus increase the volume of the tool body 11. As a result, it becomes possible to further increase the stiffness of the portions (i.e., portions corresponding to the second quadrant 52 and the fourth quadrant 54) that receive the cutting force (particularly the main component thereof) caused by the cutting edge 61.

In the cross-sections shown in Figs. 5A and 5B, as well as in Figs. 10A and 10B, the relationships shown in Equations (1) and (2) set forth below are satisfied. $d 1 \geq D \times 0.8$ (1) $d 2 \leq D \times 0.7$ (2)

Therefore, a relatively large area can be secured between the outer peripheral surface 14 and the long side portions of the chip discharge hole 30, which makes it possible to increase the stiffness of such portions and the entire rotary cutting tool 1, 2. Since such configuration makes it possible to suitably secure the flow path for the chips, stable and excellent chip discharge performance can be achieved. In addition, the tool body 10 of the rotary cutting tool 1 has the through holes 4A, 4B as part of the coolant flow path 4, it is possible to increase the amount of supply of the coolant to the cutting edge 61 and to improve lubricating performance and cooling performance.

Furthermore, in the cross-sections shown in Figs. 5A and 5B, as well as in Figs. 10A and 10B, the relationship shown in Equation (3) set forth below is satisfied. $t 1 < t 2$ (3)

Therefore, it is possible to achieve a comparative increase in the space in the first quadrant 51 and the third quadrant 53 which is located on the front side of the cutting edge 61 of the cutting insert 60 to thereby ensure the chip discharge performance, and achieve a comparative increase in the stiffness of the tool body 10, 11 in the second quadrant 52 and the fourth quadrant 54 which mainly contribute to receiving the cutting force (in particular, the main component thereof) on the rear side of the cutting edge 61 of the cutting insert 60. As a result, it is possible to achieve both a suppression of deformation of the rotary cutting tool 1, 2 and an improvement of the chip discharge performance.

Furthermore, in the cross-sections shown in Figs. 5A and 5B, as well as in Figs. 10A and 10B, the relationship shown in Equation (4) set forth below is satisfied. $s 1 < s 2$ (4)

Therefore, it becomes possible to easily secure the stiffness of the cross-section in the second quadrant 52 and the fourth quadrant 54 on which a large load acts during cutting. In addition, by setting the cross-sectional area s2 so as to be larger than the cross-sectional area s1, it becomes possible to secure a space for forming a chip discharge path in the first quadrant 51 and the third quadrant 53, while allowing the structural support to be concentrated in the second quadrant 52 and the fourth quadrant 54.

Since the inner peripheral surface 30N of the chip discharge hole 30 is formed smoothly at least in a direction in which chips are discharged (i.e., from the leading end side toward the base end side), it is possible to prevent retention or depositing of chips which may otherwise occur when steps or edges exist. Accordingly, it is possible to further improve the chip flow, and consequently improve the efficiency of the cutting process as a whole. More specifically, the inner peripheral surface 30N of the chip discharge hole 30 satisfies the relationship shown in Equation (5) set forth below. $R \geq 0.1 mm$ (5)

This advantageously improves chip carrying performance and reduces friction. In addition, although the inner peripheral surface 30N does not have to be made as smooth as a mirror finished surface, it is possible to inhibit chips from being caught on such edge or to inhibit poor chip discharge which would be likely to occur in cases where the minimum radius of curvature R of an edge is less than 0.1 mm.

lin this way, in order to form the chip discharge hole 30 having such smooth inner peripheral surface 30N, for example, additive manufacturing by a powder bed method using a metal 3D printer can be effectively employed. In such case, from the viewpoint of maintaining the shape during manufacturing, easiness in manufacturing, etc., it is preferable to employ the process of, for example, forming and building up layers from the base end side 10b toward the leading end side 10t of the rotary cutting tool 1, 2, i.e., starting from the end surface on the base end side 10b as a formation reference surface (shaping start surface) and, in a direction perpendicular thereto, sequentially forming the connection part 15, the tapered part 16 and the large-diameter part 17.

Since the rotary cutting tool 1 includes the coolant flow path 4 having through holes 4A, 4B that extend from the outer peripheral surface 14 toward the leading end side 10t, coolant that may otherwise be sucked into the chip discharge hole 30 can be directly and securely supplied to the leading end side 10t of the tool body 10 via the through holes 4A, 4B. Accordingly, a sufficient amount of coolant can be supplied to the cutting edge 61 of the cutting insert 60 which is mounted on the leading end side 10t of the rotary cutting tool 1, which makes it possible to further improve both the lubricating performance and the cooling performance during cutting, particularly in an area around the cutting edge.

In the rotary cutting tool 1, since the through holes 4A, 4B pass between the long side portions and the peripheral surface 14 and extend to the leading end surface 12 located on the leading end side 10t, the coolant flow path 4 does not have a complicated shape, which reduces pressure loss or resistance of the coolant in the through holes 4A, 4B. Therefore, a sufficient amount of coolant can be more smoothly supplied to the cutting edge 61 of the cutting insert 60. In addition, since such configuration makes it possible to form the coolant flow path 4 as a linear path having a relatively simple shape without being unnecessarily bent, the pressure loss and the flow resistance of the coolant in such through holes 4A, 4B can be effectively reduced. As a result, a sufficient amount of coolant can be stably supplied to the cutting edge 61 of the cutting insert 60, which makes it possible to further improve the lubricating performance and the cooling performance during cutting in an area around the cutting edge 61.

Since the rotary cutting tool 1, 2 is provided with three cutting inserts 60, and the respective cutting edges 61 of such cutting inserts 60 are disposed at three positions, it tends to be difficult to balance the cutting force by those cutting edges 61 alone. In this regard, in the rotary cutting tool 1, 2, considering that the cutting force on the side where the two cutting inserts 60 are disposed side-by-side is larger than the cutting force on the side where only one cutting insert 60 is disposed, the guide pads 80 are disposed at about a 270-degrees position (i.e., the lower side in Figs. 2 and 7; the fourth quadrant 54) and at about a 180-degrees position (i.e., the left side in Figs. 2 and 7; a portion spanning the second quadrant 52 and the third quadrant 53) for the purpose of stabilizing the machining diameter, whereby the cutting force can be appropriately received.

In addition, since the through hole 4B constituting part of the coolant flow path 4 has a shape wherein it branches into two sections at a midpoint of its way to the leading end side 10t of the rotary cutting tool 1, it is possible to suppress reduction in the tool stiffness of such portion, while easily increasing the flow rate of the coolant. Furthermore, since the opening area of the leading end-side opening 4Bt of the through hole 4B is smaller than the opening area of the leading end-side opening 4At of the through hole 4A and is formed in a circular shape, the strength in the fourth quadrant 54 in which the two cutting inserts 60 are disposed can be maintained at a comparatively higher level than the strength in the second quadrant 52 in which one cutting insert 60 is disposed.

Although the present embodiments have been described while referring to specific examples, the description of such specific examples is intended to facilitate the understanding of the present disclosure, instead of interpreting the present disclosure in a limited manner. In other words, the present disclosure is not limited to such specific examples, and modifications which are made as appropriate by a person skilled in the art are also encompassed in the technical scope of the present disclosure, as long as such modifications include the characteristics of the present disclosure. In addition, each element, arrangement, material, condition, shape, dimension, scaling, etc. of each of the above-described specific examples are not limited to those described, unless otherwise indicated, and may be altered as appropriate. Furthermore, elements included in each of the above-described specific examples may be combined in different ways, unless no technical contradiction occurs.

For example, the rotary cutting tools 1, 2 described in the first embodiment and the second embodiment are so-called "indexable cutting tools," wherein the cutting insert 60 can be removably mounted on the mounting seat 20 of the tool body 10, 11; however, the present disclosure can be applied to other types of cutting tools. More specifically, the present disclosure can be suitably applied to the tool bodies 10, 11 themselves with the cutting inserts 60 being removed from the rotary cutting tools 1, 2, or to a rotary cutting tool of a type in which an insert made of cemented carbide, etc. is brazed. The through hole 4B may open to the leading end surface 12 without branching into two sections at a midpoint of its way to the leading end side 10t. Furthermore, the specific arrangement or shape of the cutting inserts 60 and the guide pads 80 are not particularly limited, as described earlier. In addition, the cutting edge 61 may not be linear and, even if the cutting edge 61 is linear, it may not be parallel to the X axis.

## Claims

1. A rotary cutting tool having a cutting member on a leading end side thereof and having a cylindrical shape or a substantially cylindrical shape, the rotary cutting tool comprising:
a chip discharge hole formed from the leading end side toward a base end side, wherein at least a portion of a cross-section of the chip discharge hole, which is perpendicular to a rotational axis of the rotary cutting tool, is a non-circular cross-section having short side portions and long side portions.

2. The rotary cutting tool according to claim 1,
wherein, when a predetermined two-dimensional coordinate system is defined with coordinates of the rotational axis serving as a point of origin in at least a portion of the cross-section, relationships shown in Equation (1) and Equation (2) set forth below are satisfied: $d 1 \geq D \times 0.8$ (1) and $d 2 \leq D \times 0.7$ (2) wherein:
D represents a tool diameter of the rotary cutting tool;
d1 represents a maximum inner diameter of the non-circular cross-section in a first quadrant and a third quadrant which correspond mainly to the short side portions; and
d2 represents a maximum inner diameter of the non-circular cross-section in a second quadrant and a fourth quadrant which correspond mainly to the long side portions.

3. The rotary cutting tool according to claim 1, or 2
wherein, when a predetermined two-dimensional coordinate system is defined with coordinates of the rotational axis serving as a point of origin in at least a portion of the cross-section, a relationship shown in Equation (3) set forth below is satisfied: $t 1 < t 2$ (3), wherein:
t1 represents a thickness of a central portion of each of the short side portions in a first quadrant and a third quadrant which correspond mainly to the short side portions; and
t2 represents a thickness of a central portion of each of the long side portions in a second quadrant and a fourth quadrant which correspond mainly to the long side portions.

4. The rotary cutting tool according to claim 1, 2, or 3
wherein, when a predetermined two-dimensional coordinate system is defined with coordinates of the rotational axis serving as a point of origin in at least a portion of the cross-section, a relationship shown in Equation (4) set forth below is satisfied: $s 1 < s 2$ (4), wherein:
s1 represents a cross-sectional area in a first quadrant and a third quadrant which correspond mainly to the short side portions; and
s2 represents a cross-sectional area in a second quadrant and a fourth quadrant which correspond mainly to the long side portions.

5. The rotary cutting tool according to any one of claims 1 to 4, wherein an inner peripheral surface of the chip discharge hole is formed smoothly at least in a direction in which chips are discharged.

6. The rotary cutting tool according to claim 5,
wherein the inner peripheral surface of the chip discharge hole satisfies a relationship shown in Equation (5) set forth below: $R \geq 0.1 mm$ (5), wherein, when the inner peripheral surface has an edge, R represents a minimum radius of curvature of the edge.

7. The rotary cutting tool according to any one of claims 1 to 6, comprising a coolant flow path having a through hole that extends from an outer peripheral surface of the rotary cutting tool toward a leading end side of the rotary cutting tool.

8. The rotary cutting tool according to claim 7, wherein the coolant flow path passes between the long side portions and the outer peripheral surface and extends to an end surface on the leading end side.

9. A tool body, preferably for use in or in mounted on a rotary cutting tool in any one of claims 1 to 8, having a cylindrical shape or a substantially cylindrical shape, the tool body comprising:
a mounting seat provided on a leading end side, the mounting seat being configured to mount a cutting insert; and
a chip discharge hole formed from the leading end side toward a base end side, wherein at least a portion of a cross-section of the chip discharge hole, which is perpendicular to a rotational axis of the tool body, is a non-circular cross-section having short side portions and long side portions.
